# EUROPEAN PATENT APPLICATION

(11) **EP 2 658 235 A1**
(43) Date of publication of application: **30.10.2013**
(21) Application number: 11851486.8
(22) Date of filing: 22.12.2011
(51) Int. Cl.: H04M 15/00, H04M 1/00, H04M 3/42

(54) **MOBILE TERMINAL AND METHOD FOR MEASURING CHARGEABLE DURATION**

(30) Priority: 24.12.2010 JP 2010288772
(71) Applicant: NTT DOCOMO, INC., Chiyoda-ku Tokyo 100-6150 (JP)
(72) Inventor: MIURA Yuko, Tokyo 100-6150 (JP); WAKUI Michiko, Tokyo 100-6150 (JP); ASO Hisayuki, Tokyo 100-6150 (JP); YAMAGUCHI Hiromasa, Tokyo 100-6150 (JP)
(74) Representative: Viering, Jentschura & Partner
(86) International application number: PCT/JP2011/079905
(87) International publication number: WO 2012/086799

(57) **Abstract**

A mobile terminal measures the time from when the data communication connection was established up to the disconnection or the time from when the wireless connection was established up to the disconnection as a chargeable duration. The time in which the mobile terminal uses a network resource in a network or the time in which exchange of data was actually carried out is thus measured as the chargeable duration. Since the information relating to the chargeable duration measured in this manner is stored and displayed in the mobile terminal, it is possible for the mobile terminal to recognize the information relating to the chargeable duration without sending an inquiry to the network including a base station.

## Description

### Technical Field

The present invention relates to a mobile terminal that performs data communication via a mobile communication network and a method for measuring a chargeable duration.

### Background Art

As one method for charging for data communication using mobile terminals, pay-as-you-go charging has been employed for charging for communication that was actually carried out. Under pay-as-you-go charging, charging is based on the data amount or communication time in data communication, for example. For example, a method is known in which a data communication time is calculated and charging is based on the calculated communication time (for example, see Patent Literature 1).

### Citation List

### Patent Literature

Patent Literature 1: Japanese Patent Application Laid-Open Publication No. 2001-237990

### Summary of Invention

### Technical Problem

In recent years, what is called prepaid charging has been under consideration as a prepaid-type charging scheme. Prepaid charging is a charging scheme in which a communication fee corresponding to a predetermined communication volume is paid in advance to enable communication until the volume of communication actually carried out reaches the predetermined communication volume. In prepaid charging, it is desirable for a user of a mobile terminal to grasp the remaining time in which data communication is possible or the remaining volume of the data communication volume. However, since sessions upon carrying out the data communication and establishment and disconnection of wireless connection are managed on the network side including a base station, an accurate communication volume, communication time, and other information are held on the network side. Thus, the mobile terminal cannot obtain such pieces of information as the accurate communication time and communication volume without sending an inquiry to the network. It is not preferable to consume resources of wireless communication and the network for the purpose of this inquiry.

The present invention has been made in view of the foregoing, and it is an object to provide a mobile terminal and a method for measuring a chargeable duration that enable recognition of information relating to a communication time to be charged without sending an inquiry to a network for prepaid charging that is based on a communication time.

### Solution to Problem

To solve the problem described above, a mobile terminal according to one aspect of the present invention is a mobile terminal that performs data communication via a mobile communication network, including data communication connection establishing means for controlling establishment of data communication connection for performing the data communication with the mobile communication network, data communication connection disconnecting means for controlling disconnection of the data communication connection, wireless connection establishing means for controlling establishment of wireless connection with the mobile communication network, wireless connection disconnecting means for controlling disconnection of the wireless connection, chargeable duration storage means for storing a chargeable duration for charging for the data communication, chargeable duration measuring means for causing the chargeable duration storage means to store, as the chargeable duration, a time from data communication connection established time that is when the data communication connection was established in the data communication connection establishing means up to a data communication connection disconnected time that is when the data communication connection was disconnected in the data communication connection disconnecting means or a time from a wireless connection established time that is when the wireless connection was established in the wireless connection establishing means up to a wireless connection disconnected time that is when the wireless connection was disconnected in the wireless connection disconnecting means, and display means for referring to the chargeable duration storage means and displaying information relating to the chargeable duration.

To solve the problem described above, a chargeable duration measuring method according to one aspect of the present invention is a chargeable duration measuring method for a mobile terminal that performs data communication via a mobile communication network, including a data communication connection establishing step of controlling establishment of data communication connection for performing the data communication with the mobile communication network, a wireless connection establishing step of controlling establishment of wireless connection with the mobile communication network, a chargeable duration measurement starting step of starting measurement of a chargeable duration for charging for the data communication at a data communication connection established time that is when the data communication connection was established in the data communication connection establishing step or a wireless connection established time that is when the wireless connection was established in the wireless connection establishing step, a data communication connection disconnecting step of controlling disconnection of the data communication connection, a wireless connection disconnecting step of controlling disconnection of the wireless connection, a chargeable duration measurement terminating step of terminating the measurement of the chargeable duration at a data communication connection disconnected time that is when the data communication connection was disconnected in the data communication connection disconnecting step or a wireless connection disconnected time that is when the wireless connection was disconnected in the wireless connection disconnecting step, a chargeable duration storing step of storing, as the chargeable duration, a time from when the measurement of the chargeable duration was started in the chargeable duration measurement starting step up to when the measurement of the chargeable duration was terminated in the chargeable duration measurement terminating step, and a displaying step of displaying information relating to the chargeable duration stored in the chargeable duration storing step.

Since the time from when the data communication connection was established up to the disconnection is measured as the chargeable duration with the mobile terminal and the chargeable duration measuring method, the time in which the mobile terminal uses the network resource in the mobile communication network is measured as the chargeable duration. Also, with the mobile terminal and the chargeable duration measuring method, the time from when the wireless connection was established up to the disconnection may be measured as the chargeable duration. In such cases, the time in which exchange of data was actually carried out is measured as the chargeable duration. Since the information relating to the chargeable duration measured as described above is stored and displayed in the mobile terminal, it is possible for the mobile terminal to recognize the information relating to the chargeable duration without sending an inquiry to the mobile communication network including a base station.

The mobile terminal according to one aspect of the present invention may be such that the data communication connection establishing means receives, in response to a data communication connection request that the data communication connection establishing means has transmitted to the mobile communication network, a data communication connection response returned from the mobile communication network, the wireless connection establishing means transmits, upon receiving a wireless connection establishment response from the mobile communication network in response to a wireless connection establishment request that the wireless connection establishing means has transmitted to the mobile communication network, a wireless connection establishment notification that is a notification indicating that the wireless connection has been established to the mobile communication network, and the chargeable duration measuring means assumes the data communication connection established time to be when the data communication connection establishing means received the data communication connection response and assumes the wireless connection established time to be when the wireless connection establishing means transmitted the wireless connection establishment notification.

With the configuration described above, the start time of the measurement of the chargeable duration is when the data communication connection response from the mobile communication network side was received or when the wireless connection establishment notification was transmitted to the mobile communication network side. Thus, since the measurement is started at a time close to an accurate start time of charging on the mobile communication network side, the chargeable duration can be measured with high precision.

The mobile terminal according to one aspect of the present invention may be such that the data communication connection disconnecting means transmits a data communication disconnection request requesting disconnection of the data communication connection to the mobile communication network and receives a data communication disconnection response returned from the mobile communication network in response to the data communication disconnection request, and the chargeable duration measuring means assumes the data communication connection disconnected time to be when the data communication connection disconnecting means transmitted the data communication disconnection request or received the data communication disconnection response.

With the configuration described above, the termination time of the measurement of the chargeable duration is determined to be when the data communication disconnection request was transmitted to the mobile communication network side. Thus, the chargeable duration approximately equivalent to the chargeable duration on the mobile communication network side can measured even in the case where the data communication disconnection response has not been able to be received from the mobile communication network side due to some reason. Also, in the case where the termination time of the measurement of the chargeable duration is assumed to be when the data communication disconnection response was received, the measurement of the chargeable duration can be terminated after the measurement of the chargeable duration has been terminated for certain on the mobile communication network side, and therefore the chargeable duration approximately equivalent to the chargeable duration on the mobile communication network side can be measured.

The mobile terminal according to one aspect of the present invention may be such that the data communication connection disconnecting means receives a data communication disconnection request requesting disconnection of the data communication connection from the mobile communication network and transmits a data communication disconnection response that is a notification to respond to the data communication disconnection request to the mobile communication network, and the chargeable duration measuring means assumes the data communication connection disconnected time to be when the data communication connection disconnecting means received the data communication disconnection request or transmitted the data communication disconnection response.

With the configuration described above, the termination time of the measurement of the chargeable duration is assumed to be when the data communication disconnection request was received from the mobile communication network side. In this case, the chargeable duration approximately equivalent to the chargeable duration on the mobile communication network side can be measured even in the case where the data communication disconnection response has not been able to be received on the mobile communication network side from the mobile terminal. Also, in the case where the termination time of the measurement of the chargeable duration is assumed to be when the data communication disconnection response was transmitted to the mobile communication network side, the measurement of the chargeable duration can be terminated at a timing at which the measurement of the chargeable duration is terminated for certain on the mobile communication network side, and therefore the chargeable duration approximately equivalent to the chargeable duration on the mobile communication network side can be measured.

The mobile terminal according to one aspect of the present invention may be such that the wireless connection disconnecting means receives a wireless connection disconnection request that is a notification requesting disconnection of the wireless connection from the mobile communication network and transmits a wireless connection disconnection response that is a notification indicating completion of disconnection control of the wireless connection to the mobile communication network in response to the wireless connection disconnection request, and the chargeable duration measuring means assumes the wireless connection disconnected time to be when the wireless connection disconnecting means received the wireless connection disconnection request or transmitted the wireless connection disconnection response.

With the configuration described above, the termination time of the measurement of the chargeable duration is assumed to be when the wireless connection disconnection request was received. In this case, the chargeable duration approximately equivalent to the chargeable duration on the mobile communication network side can be measured in the mobile terminal, even in the case where the wireless connection disconnection response has not been able to be received on the mobile communication network side from the mobile terminal. Also, in the case where the termination time of the measurement of the chargeable duration is assumed to be when the wireless connection disconnection response was transmitted, the measurement of the chargeable duration can be terminated at a timing at which the measurement of the chargeable duration is terminated for certain on the mobile communication network side, and therefore the chargeable duration approximately equivalent to the chargeable duration on the mobile communication network side can be measured.

The mobile terminal according to one aspect of the present invention may further include chargeable duration information receiving means for receiving chargeable duration information relating to the chargeable duration measured in the mobile communication network from the mobile communication network, and chargeable duration correcting means for correcting the chargeable duration stored in the chargeable duration storage means based on the chargeable duration information received by the chargeable duration information receiving means.

With the configuration described above, the chargeable duration in the mobile terminal can be corrected based on the true chargeable duration information measured on the mobile communication network side, and therefore information relating to the accurate chargeable duration can be recognized in the mobile terminal.

### Advantageous Effects of Invention

It is possible to recognize information relating to a chargeable duration without performing an inquiry to a network.

### Brief Description of Drawings

[Fig. 1]Fig. 1 is a block diagram showing the functional configuration of a mobile terminal and a network.
[Fig. 2]Fig. 2 is a hardware block diagram of the mobile terminal.
[Fig. 3] Fig. 3 is a timing chart showing the measurement of a chargeable duration based on the establishment of a PDP context.
[Fig. 4] Fig. 4 is a diagram showing an example of information relating to the chargeable duration stored in a chargeable duration storage unit.
[Fig. 5]Fig. 5 is a diagram showing a display example of the information relating to the chargeable duration that is displayed in a display unit.
[Fig. 6]Fig. 6 is a timing chart showing the measurement of the chargeable duration based on the establishment of RRC connection.
[Fig. 7]Fig. 7 is a timing chart showing an example of the measurement of the chargeable duration based on the established time and the disconnected time of the PDP context.
[Fig. 8]Fig. 8 is a timing chart showing an example of the measurement of the chargeable duration based on the established time and the disconnected time of the PDP context.
[Fig. 9]Fig. 9 is a timing chart showing an example of the measurement of the chargeable duration based on the established time and the disconnected time of the PDP context.
[Fig. 10] Fig. 10 is a timing chart showing an example of the measurement of the chargeable duration based on the established time and the disconnected time of the PDP context.
[Fig. 11] Fig. 11 is a timing chart showing an example of the measurement of the chargeable duration based on the established time and the disconnected time of the RRC connection.
[Fig. 12] Fig. 12 is a timing chart showing an example of the measurement of the chargeable duration based on the established time and the disconnected time of the RRC connection.
[Fig. 13] Fig. 13 is a timing chart showing the reception of the information relating to the chargeable duration from a network side and a correction process of the chargeable duration.
[Fig. 14] Fig. 14 is a diagram showing an example of the correction of the information relating to the chargeable duration in the chargeable duration storage unit.
[Fig. 15] Fig. 15 is a diagram showing a display example at the time of correction of the information relating to the chargeable duration.
[Fig. 16] Fig. 16 is a timing chart showing an example of the reception of the information relating to the chargeable duration from the network side and the correction process of the chargeable duration.
[Fig. 17] Fig. 17 is a diagram showing a display example at the time of correction of the information relating to the chargeable duration.
[Fig. 18] Fig. 18 is a diagram showing an example of the correction of the information relating to the chargeable duration in the chargeable duration storage unit.
[Fig. 19] Fig. 19 is a diagram showing an example of the correction of the information relating to the chargeable duration in the chargeable duration storage unit.
[Fig. 20] Fig. 20 is a timing chart showing an example of the correction process of the information relating to the chargeable duration triggered by an inquiry from the mobile terminal.

### Description of Embodiments

An embodiment for a mobile terminal according to the present invention will be described with reference to the drawings. Note that, in cases where possible, the same portions are denoted by the same reference signs, and redundant descriptions are omitted.

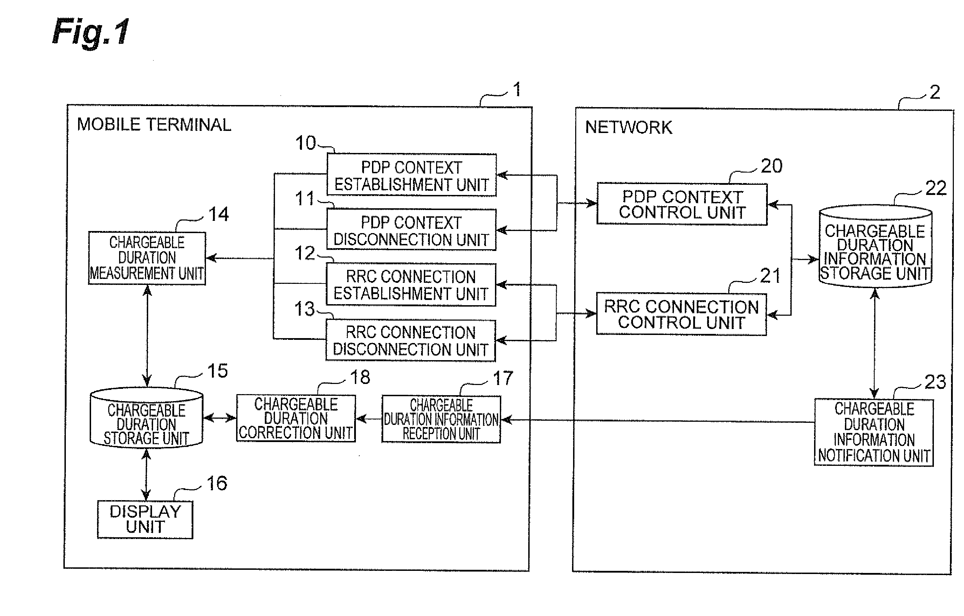

Fig. 1 is a block diagram showing the functional configuration of a mobile terminal 1 and a network 2. The mobile terminal 1 in this embodiment is a device that performs data communication via what is called a mobile communication network. While an accurate value of the time at which a session or wireless connection for data communication has been established is held on the network side, it is desirable that a time according to communication actually carried out in the mobile terminal 1 be grasped when employing prepaid charging. The mobile terminal 1 in this embodiment acquires a chargeable duration intended for charging without using wireless and network resources for an inquiry to the network 2 side. Then, in the case where accurate information relating to the chargeable duration is acquired from the network 2, the mobile terminal 1 corrects and updates information relating to the chargeable duration held in the mobile terminal 1.

As shown in Fig. 1, the mobile terminal 1 functionally includes a PDP context establishment unit 10 (data communication connection establishing means), a PDP context disconnection unit 11 (data communication connection disconnecting means), an RRC connection establishment unit 12 (wireless connection establishing means), an RRC connection disconnection unit 13 (wireless connection disconnecting means), a chargeable duration measurement unit 14 (chargeable duration measuring means), a chargeable duration storage unit 15 (chargeable duration storage means), a display unit 16 (display means), a chargeable duration information reception unit 17 (chargeable duration information receiving means), and a chargeable duration correction unit 18 (chargeable duration correcting means).

The network 2 in this embodiment refers to a group of devices forming a mobile communication network including a base station and capable of communicating with each other via a communication network. The network 2 functionally includes a PDP context control unit 20, an RRC connection control unit 21, a chargeable duration information storage unit 22, and a chargeable duration information notification unit 23.

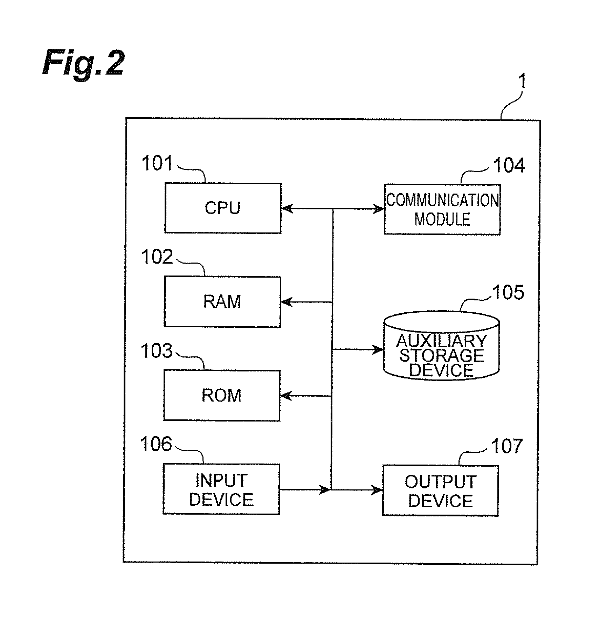

Fig. 2 is a hardware configuration diagram of the mobile terminal 1. As shown in Fig. 2, the mobile terminal 1 is physically configured as a computer system including a CPU 101, a RAM 102 and a ROM 103 that are a main storage device, a communication module 104 that is a data exchange device, an auxiliary storage device 105 such as a hard disk or a flash memory, an input device 106 such as a keyboard that is an input device, an output device 107 such as a display, and the like. Each function shown in Fig. 1 is achieved by loading a predetermined computer software on hardware such as the CPU 101 or the RAM 102 shown in Fig. 2 to operate the communication module 104, the input device 106, and the output device 107 under the control of the CPU 101 and perform reading and writing of data in the RAM 102 or the auxiliary storage unit 105.

In order for the mobile terminal 1 to carry out data communication (packet communication) with the network 2, establishment of a Packet Data Protocol (PDP) context as a session of the data communication is necessary. The establishment of the PDP context is to validate information (for example, IP address of destination or identifier information between nodes for IP communication) of communication stored in each node for performing the data communication. Accordingly, data communication connection is established. That is, in this embodiment, "establishment of data communication connection" refers to activating the PDP context. Also, in order for the mobile terminal 1 to carry out wireless communication with the network 2, establishment of a Radio Resource Control (RRC) connection as a wireless connection is necessary. Referring to Fig. 1 again, each functional unit of the mobile terminal 1 will be described in detail.

The PDP context establishment unit 10 is a portion that controls the establishment of the data communication connection for performing the data communication with the network 2. Specifically, the PDP context establishment unit 10 carries out a process for activation of the PDP context. Accordingly, the session for the data communication between the mobile terminal 1 and the network 2 is established.

The PDP context disconnection unit 11 is a portion that controls the disconnection of the data communication connection. Specifically, the PDP context disconnection unit 11 carries out a process for deactivation of the PDP context.

The RRC connection establishment unit 12 is a portion that controls the establishment of the wireless connection with the network 2. Specifically, the RRC connection establishment unit 12 carries out a process for establishing the RRC connection with the network 2.

The RRC connection disconnection unit 13 is a portion that controls the disconnection of the wireless connection. Specifically, the RRC connection disconnection unit 13 carries out a process for disconnecting the RRC connection with the network 2.

The chargeable duration measurement unit 14 acquires the chargeable duration intended for charging. In the case of charging for the PDP context establishment, the chargeable duration measurement unit 14 causes the chargeable duration storage unit 15 to store, as the chargeable duration, a time from a data communication connection established time that is when the data communication connection was established in the PDP context establishment unit 10 up to a data communication connection disconnected time that is when the data communication connection was disconnected in the PDP context disconnection unit 11.

In the case of charging for the RRC connection establishment, the chargeable duration measurement unit 14 causes the chargeable duration storage means to store, as the chargeable duration, a time from a wireless connection established time that is when the wireless connection was established in the RRC connection establishment unit 12 up to a wireless connection disconnected time that is when the wireless connection was disconnected in the RRC connection disconnection unit 13.

The chargeable duration storage unit 15 is storage means for storing the chargeable duration for charging for the data communication. While an accurate value of the chargeable duration used for charging is measured and held on the network 2 side, the chargeable duration stored in the chargeable duration storage unit 15 by the chargeable duration measurement unit 14 is measured on the mobile terminal 1 side.

The display unit 16 refers to the chargeable duration storage unit 15 and displays the information relating to the chargeable duration. The information relating to the chargeable duration displayed herein is, for example, a start time or termination time of the data communication connection or wireless connection or a usage time that is the time for which there has been a connection. Also, information such as an accumulated usage time or remaining time in prepaid charging can be included.

The chargeable duration information reception unit 17 is a portion that receives chargeable duration information relating to the chargeable duration measured in the network 2 from the network 2. The chargeable duration correction unit 18 is a portion that corrects the chargeable duration stored in the chargeable duration storage unit 15 based on the chargeable duration information received by the chargeable duration information reception unit 17. Details of the reception of the chargeable duration information from the network 2 and a process of correction of the chargeable duration based on the chargeable duration information will be described later.

Subsequently, each functional unit of the network 2 will be described. The PDP context control unit 20 is a portion that controls the establishment of the PDP context in the data communication with the mobile terminal 1. Specifically, the PDP context control unit 20 carries out a process such as activation and deactivation of the PDP context through a predetermined communication process with the PDP context establishment unit 10 and the PDP context disconnection unit 11 of the mobile terminal 1. Also, in the case of charging for the PDP context establishment, the PDP context control unit 20 stores the chargeable duration information in the chargeable duration information storage unit 22 based on the time for which the PDP context has been established. The chargeable duration information can include, for example, information such as the time at which the PDP context has been activated and deactivated, the usage time that is the length of time for which the PDP context has been established, or the accumulated usage time and remaining time in prepaid charging.

The RRC connection control unit 21 is a portion that controls the establishment of the wireless connection with the mobile terminal 1. Specifically, the RRC connection control unit 21 carries out a process such as the establishment and disconnection of the wireless connection through a predetermined process with the RRC connection establishment unit 12 and the RRC connection disconnection unit 13 of the mobile terminal 1. Also, in the case of charging for the RRC connection establishment, the RRC connection control unit 21 stores the chargeable duration information in the chargeable duration information storage unit 22 based on the time for which the wireless connection has been established. The chargeable duration information stored herein can include, for example, information such as the time at which the wireless connection has been established and disconnected, the usage time that is the length of time for which the wireless connection has been established, or the accumulated usage time and remaining time in prepaid charging.

The chargeable duration information storage unit 22 is storage means for storing the chargeable duration information. Also, the chargeable duration information notification unit 23 is a portion that notifies the mobile terminal 1 of the chargeable duration information held in the chargeable duration information storage unit 22. Note that the details of a process relating to the notification of the chargeable duration information will be described later.

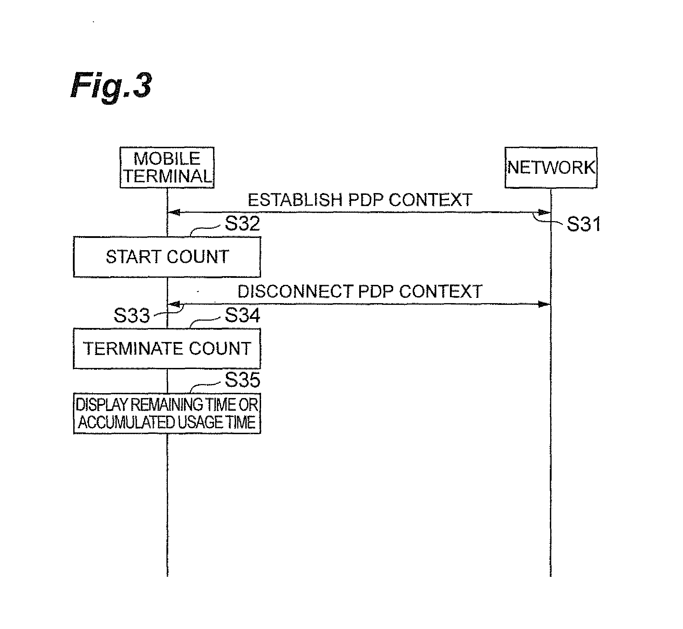

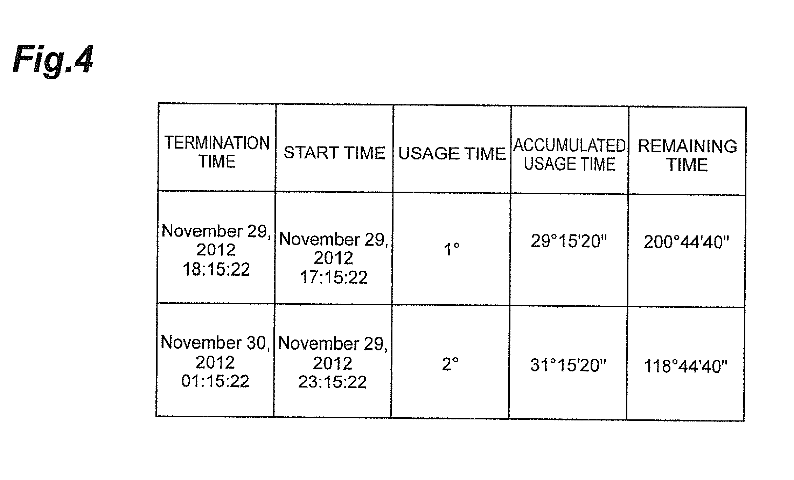

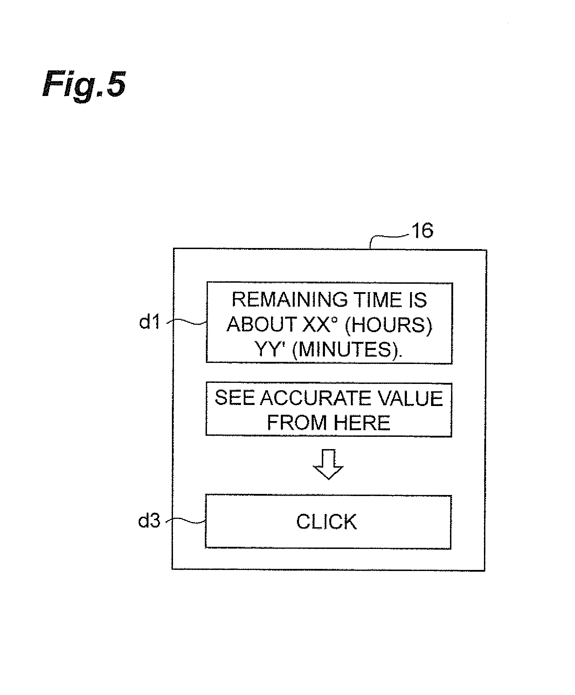

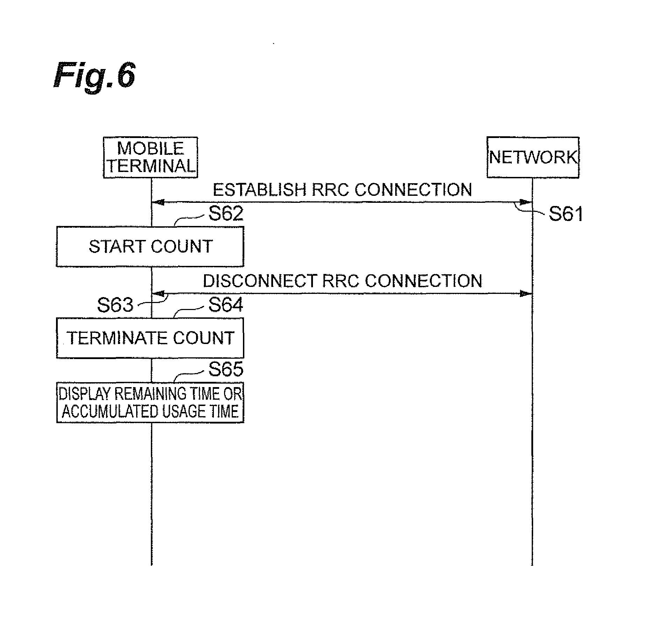

Next, with reference to Figs. 3 to 6, the measurement, storage, and display of the chargeable duration in the mobile terminal 1 will be described. Fig. 3 is a timing chart showing the measurement of the chargeable duration based on the establishment of the PDP context and display process. Fig. 4 is a diagram showing an example of the information relating to the chargeable duration stored in the chargeable duration storage unit 15. Fig. 5 is a diagram showing a display example of the information relating to the chargeable duration that is displayed in the display unit 16. Fig. 6 is a timing chart showing the measurement of the chargeable duration based on the establishment of the RRC connection.

As shown in Fig. 3, when the PDP context is first established between the PDP context establishment unit 10 of the mobile terminal 1 and the PDP context control unit 20 of the network 2 in step S31 (a data communication connection establishing step), the chargeable duration measurement unit 14 starts the count of the chargeable duration and stores the start time in the chargeable duration storage unit 15 (S32, a chargeable duration measurement starting step, a chargeable duration storing step).

Subsequently, when the PDP context is disconnected between the PDP context disconnection unit 11 of the mobile terminal 1 and the PDP context control unit 20 of the network 2 in step S33 (a data communication connection disconnecting step), the chargeable duration measurement unit 14 terminates the count of the chargeable duration and stores the termination time in the chargeable duration storage unit 15 (S34, a chargeable duration measurement terminating step, a chargeable duration storing step).

As shown in Fig. 4, the chargeable duration storage unit 15 stores the termination time, the start time, the usage time, the accumulated usage time, and the remaining time as the information relating to the chargeable duration. The termination time is the time at which the count of the chargeable duration has been terminated. The start time is the time at which the count of the chargeable duration has been started. The usage time is the time from the start time up to the termination time. The accumulated usage time is an accumulated value of the usage time. Also, the remaining time is the usage time remaining in prepaid, pay-as-you-go charging where the usage time for which data communication is possible is set in advance.

Note that although the chargeable duration storage unit 15 stores the five items described above as the information relating to the chargeable duration in this embodiment, it suffices that at least one of the accumulated usage time and the remaining time is stored together with the termination time. Also, the accumulated usage time and the remaining time are calculated by, for example, the chargeable duration measurement unit 14.

The accumulated usage time and the remaining time are reset, at the time of contract (including the time of re-signing) of the data communication with prepaid, pay-as-you-go charging or at the time of charging, to 0 hours and a predetermined time set in a contract or the time of charge. These times can be set by a manual input by a user. Also, these times may be acquired from contract information that the mobile terminal 1 transmits upon an online contract or a contract completion notification transmitted to the mobile terminal 1 after completion of the contract.

Referring to Fig. 3 again, the display unit 16 acquires the information relating to the chargeable duration from the chargeable duration storage unit 15 and displays the acquired information in step S35 (a displaying step). The information displayed herein includes at least one of the accumulated usage time and the remaining time. As shown in Fig. 5, the display unit 16 brings up a display d1 relating to the remaining time, for example. This display may be triggered by a click operation by a user, for example.

Through a click operation of an operation object d3 displayed in the display unit 16, the mobile terminal 1 can acquire an accurate value relating to the chargeable duration from the network 2. This acquisition process will be described later.

As shown in Fig. 6, the mobile terminal 1 can measure the chargeable duration based on the establishment of the RRC connection instead of the establishment of the PDP context. When the RRC connection is first established between the RRC connection establishment unit 12 of the mobile terminal 1 and the RRC connection control unit 21 of the network 2 in step S61 (a wireless connection establishing step), the chargeable duration measurement unit 14 starts the count of the chargeable duration and stores the start time in the chargeable duration storage unit 15 (S62, the chargeable duration measurement starting step, the chargeable duration storing step).

Subsequently, when the RRC connection is disconnected between the RRC connection disconnection unit 13 of the mobile terminal 1 and the RRC connection control unit 21 of the network 2 in step S63 (a wireless connection disconnecting step), the chargeable duration measurement unit 14 terminates the count of the chargeable duration and stores the termination time in the chargeable duration storage unit 15 (S64, the chargeable duration measurement terminating step, the chargeable duration storing step).

Then, in step S65 (the displaying step), the display unit 16 acquires the information relating to the chargeable duration from the chargeable duration storage unit 15 and displays the accumulated usage time or the remaining time.

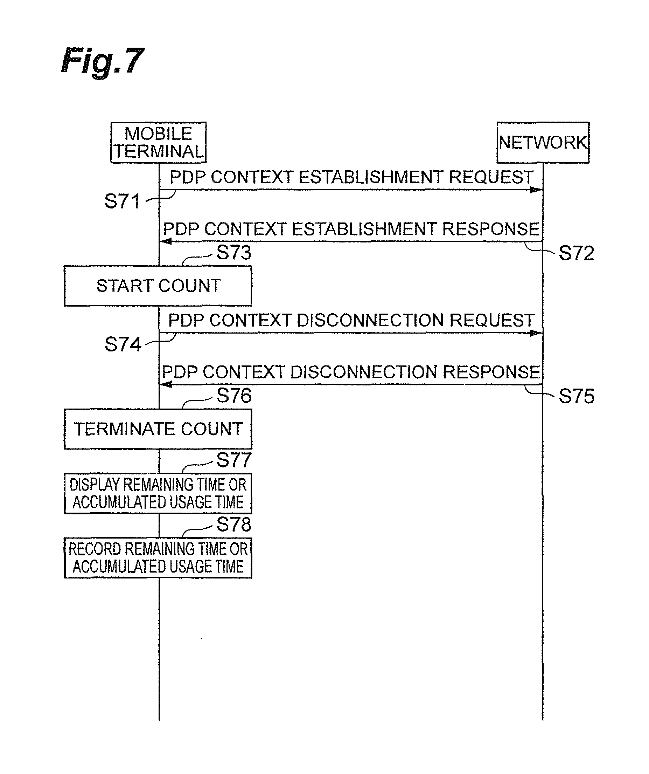

Subsequently, with reference to Figs. 7 to 10, the measurement of the chargeable duration based on the establishment of the PDP context and the display process in the mobile terminal 1 will be specifically described. Figs. 7 to 10 are timing charts showing examples of the measurement of the chargeable duration based on the established time and the disconnected time of the PDP context.

As shown in Fig. 7, the PDP context establishment unit 10 first transmits a PDP context establishment request (data communication connection request) to the network 2 (S71). Subsequently, the PDP context control unit 20 of the network 2 returns a PDP context establishment response (data communication connection response) in response to the PDP context establishment request. Then, the PDP context establishment unit 10 receives the PDP context establishment response (S72). In this manner, the PDP context is established by the PDP context establishment request and the PDP context establishment response being exchanged between the mobile terminal 1 and the network 2.

Assuming the time at which the PDP context establishment unit 10 has received the PDP context establishment response as a PDP context established time (data communication connection established time), the chargeable duration measurement unit 14 starts the count of the chargeable duration and stores the PDP context established time in the chargeable duration storage unit 15 as the start time of the chargeable duration (S73). Accordingly, the time at which the PDP context establishment response from the network 2 side has been received is assumed as the starting time of the measurement of the chargeable duration. Thus, since the measurement is started at a time close to an accurate measurement starting time of the chargeable duration on the network 2 side, the chargeable duration can be measured with high precision.

Next, the PDP context disconnection unit 11 transmits a PDP context disconnection request (data communication disconnection request) to the network 2 (S74). Subsequently, the PDP context control unit 20 of the network 2 returns a PDP context disconnection response (data communication disconnection response) in response to the PDP context disconnection request. Then, the PDP context disconnection unit 11 receives the PDP context disconnection response (S75). In this manner, the PDP context is disconnected (deactivated) by the PDP context disconnection request and the PDP context disconnection response being exchanged between the mobile terminal 1 and the network 2.

Assuming the time at which the PDP context disconnection unit 11 has received the PDP context disconnection response as a PDP context disconnected time (data communication connection disconnected time), the chargeable duration measurement unit 14 terminates the count of the chargeable duration and stores the PDP context disconnected time in the chargeable duration storage unit 15 as the termination time of the chargeable duration (S76). Accordingly, the chargeable duration approximately equivalent to the chargeable duration on the network 2 side can be measured, since the mobile terminal 1 can terminate the measurement of the chargeable duration after the measurement of the chargeable duration has been terminated for certain on the network 2 side. Note that the usage time, the accumulated usage time, and the remaining time in the chargeable duration storage unit 15 are calculated by the chargeable duration measurement unit 14 according to necessity.

Next, the display unit 16 acquires the information relating to the chargeable duration from the chargeable duration storage unit 15 and displays one or both of the accumulated usage time and the remaining time (S77). Also, the chargeable duration measurement unit 14 stores one or both of the accumulated usage time and the remaining time in the chargeable duration storage unit 15 (S78). Note that processes shown in step S77 and step S78 may be carried out with one preceding the other or may be carried out simultaneously. Regarding the point of random order for the processes of recording and displaying the accumulated usage time and the remaining time, it applies similarly to variations described below. Furthermore, S77 may be triggered by a user and carried out. That is, it may be such that a menu or the like for displaying the remaining time is displayed so that the user can execute it to display the accumulated usage time and the remaining time. Also, the menu for displaying the remaining time may be settable by the user to be displayed after use.

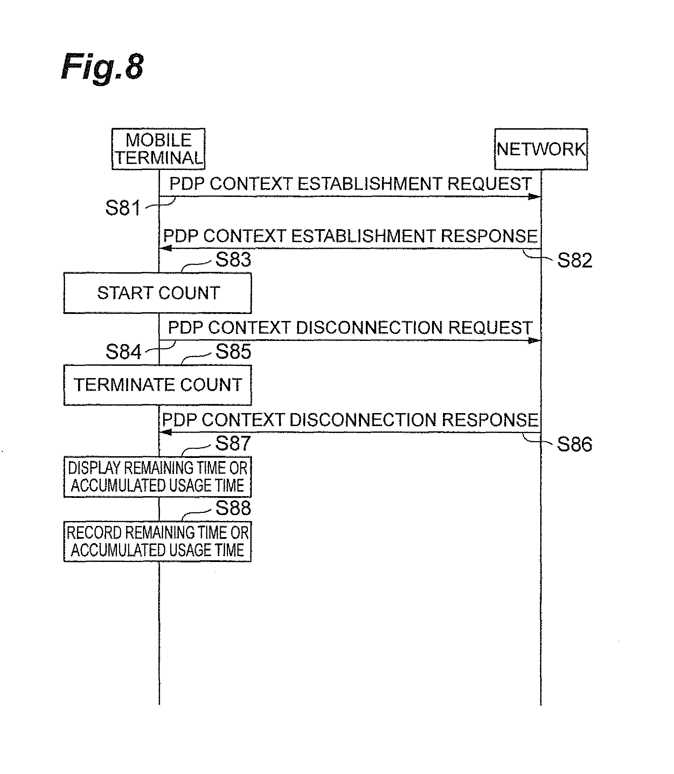

Next, with reference to Fig. 8, another example of the measurement of the chargeable duration based on the established time and the disconnected time of the PDP context in the mobile terminal 1 will be described. As shown in Fig. 8, the PDP context establishment unit 10 first transmits the PDP context establishment request to the network 2 (S81). Subsequently, the PDP context establishment unit 10 receives the PDP context establishment response returned from the PDP context control unit 20 in response to the PDP context establishment request (S82). Accordingly, the PDP context is established. Then, assuming the time at which the PDP context establishment unit 10 has received the PDP context establishment response as the PDP context established time, the chargeable duration measurement unit 14 starts the count of the chargeable duration and stores the PDP context established time in the chargeable duration storage unit 15 as the start time of the chargeable duration (S83).

Next, the PDP context disconnection unit 11 transmits the PDP context disconnection request to the network 2 (S84). Subsequently, assuming the time at which the PDP context disconnection unit 11 has transmitted the PDP context disconnection request as the PDP context disconnected time, the chargeable duration measurement unit 14 terminates the count of the chargeable duration and stores the PDP context disconnected time in the chargeable duration storage unit 15 as the termination time of the chargeable duration (S85). Accordingly, the chargeable duration approximately equivalent to the chargeable duration on the network 2 side can be measured, even in the case where the PDP context disconnection response has not been able to be received from the network 2 due to some reason.

Subsequently, the PDP context disconnection unit 11 receives the PDP context disconnection response returned in response to the PDP context disconnection request (S86).

Then, the display unit 16 acquires the information relating to the chargeable duration from the chargeable duration storage unit 15 and displays one or both of the accumulated usage time and the remaining time (S87). Also, the chargeable duration measurement unit 14 stores one or both of the accumulated usage time and the remaining time in the chargeable duration storage unit 15 (S88).

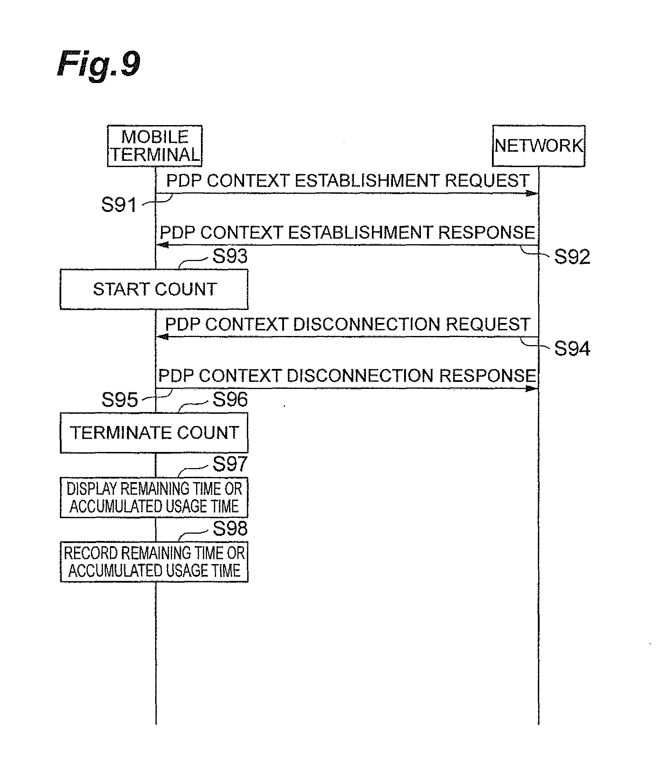

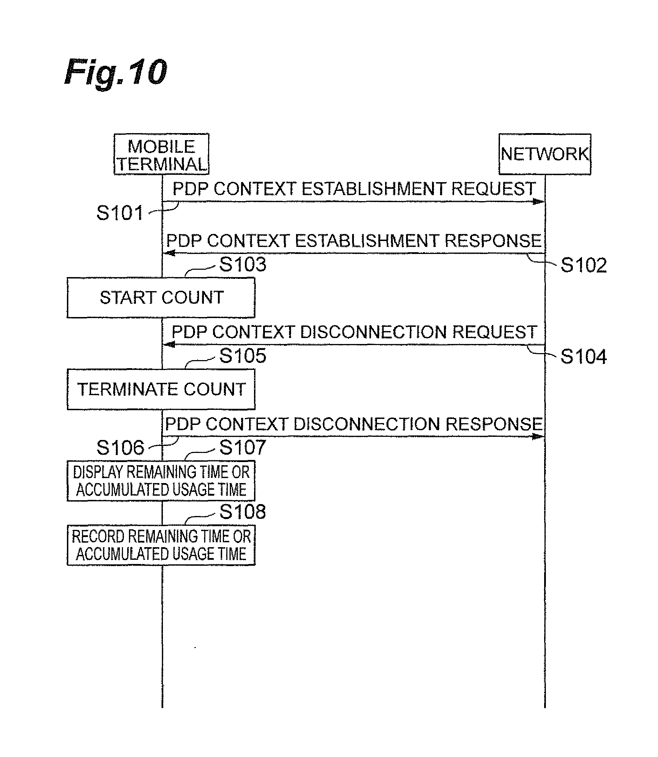

Next, with reference to Fig. 9, another example of the measurement of the chargeable duration based on the established time and the disconnected time of the PDP context in the mobile terminal 1 will be described. In the examples shown in Fig. 9 and Fig. 10 described later, the PDP context disconnection request from the network 2 triggers the PDP context disconnection, and the PDP context is disconnected (deactivated) by the PDP context disconnection response being transmitted from the mobile terminal 1 to the network 2.

Processes in steps S91 to S93 are similar to the examples shown in Fig. 7 and Fig. 8, and therefore description will be omitted. Next, the PDP context disconnection unit 11 receives the PDP context disconnection request transmitted from the PDP context control unit 20 of the network 2 (S94).

The PDP context disconnection unit 11 transmits the PDP context disconnection response to the network 2 in response to the PDP context disconnection request (S95). Subsequently, assuming the time at which the PDP context disconnection unit 11 has transmitted the PDP context disconnection response as the PDP context disconnected time, the chargeable duration measurement unit 14 terminates the count of the chargeable duration and stores the PDP context disconnected time in the chargeable duration storage unit 15 as the termination time of the chargeable duration (S96). Accordingly, the chargeable duration approximately equivalent to the chargeable duration on the network 2 side can be measured, since the mobile terminal 1 can terminate the measurement of the chargeable duration at a timing at which the measurement of the chargeable duration is terminated for certain on the network 2 side.

Then, the display unit 16 acquires the information relating to the chargeable duration from the chargeable duration storage unit 15 and displays one or both of the accumulated usage time and the remaining time (S97). Also, the chargeable duration measurement unit 14 stores one or both of the accumulated usage time and the remaining time in the chargeable duration storage unit 15 (S98).

Next, with reference to Fig. 10, another example of the measurement of the chargeable duration based on the established time and the disconnected time of the PDP context in the mobile terminal 1 will be described. Processes in steps S101 to S103 are similar to the example shown in Figs. 7 to 9, and therefore description will be omitted. Next, the PDP context disconnection unit 11 receives the PDP context disconnection request transmitted from the PDP context control unit 20 of the network 2 (S104).

Subsequently, assuming the time at which the PDP context disconnection unit 11 has received the PDP context disconnection request as the PDP context disconnected time, the chargeable duration measurement unit 14 terminates the count of the chargeable duration and stores the PDP context disconnected time in the chargeable duration storage unit 15 as the termination time of the chargeable duration (S105). Accordingly, the chargeable duration approximately equivalent to the chargeable duration measured on the network 2 side can be measured in the mobile terminal 1, even in the case where the PDP context disconnection response from the mobile terminal 1 has not been able to be received on the network 2 side.

Subsequently, the PDP context disconnection unit 11 transmits the PDP context disconnection response to the network 2 in response to the PDP context disconnection request (S106). Then, the display unit 16 acquires the information relating to the chargeable duration from the chargeable duration storage unit 15 and displays one or both of the accumulated usage time and the remaining time (S107). Also, the chargeable duration measurement unit 14 stores one or both of the accumulated usage time and the remaining time in the chargeable duration storage unit 15 (S108).

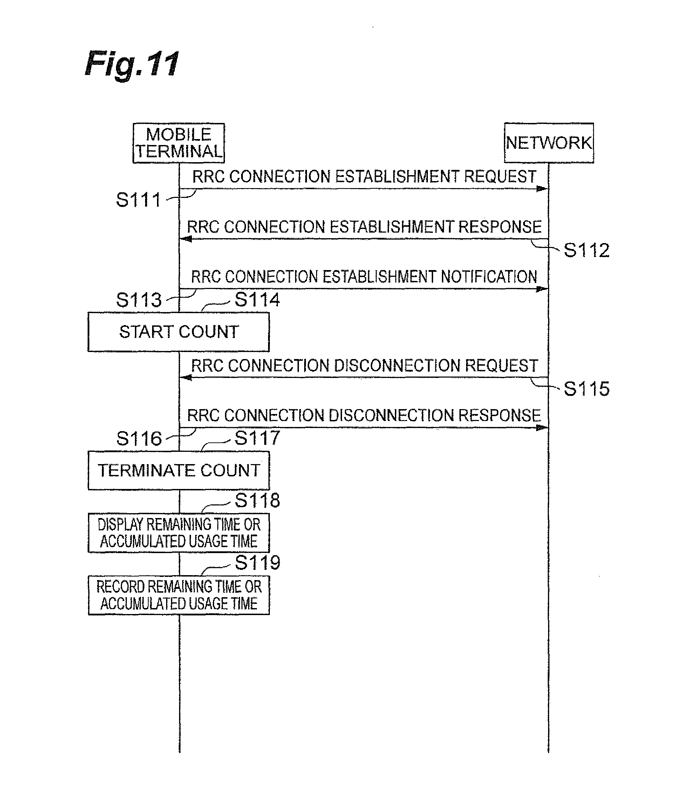

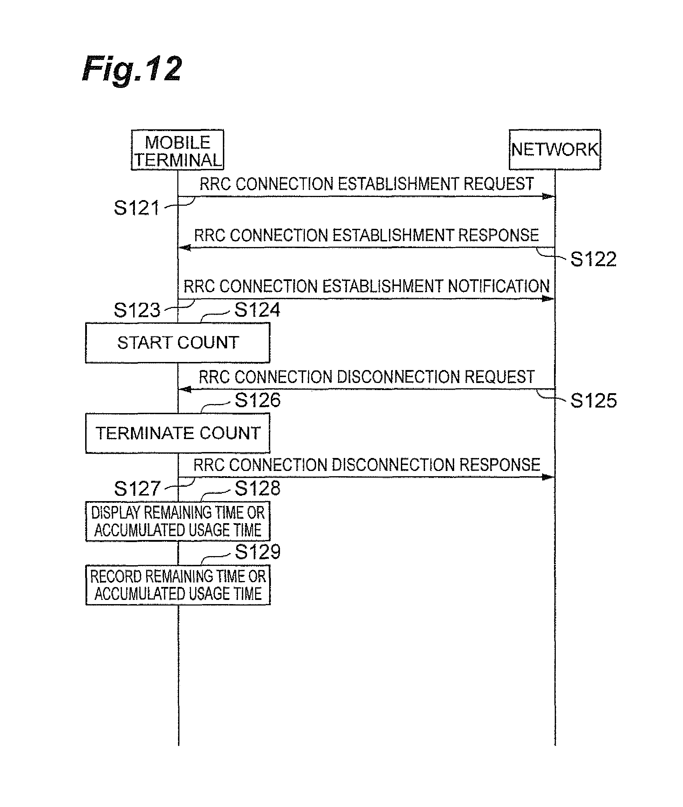

Subsequently, with reference to Figs. 11 and 12, the measurement of the chargeable duration based on the establishment of the RRC connection and the display process in the mobile terminal 1 will be specifically described. Figs. 11 and 12 are timing charts showing examples of the measurement of the chargeable duration based on the established time and the disconnected time of the RRC connection.

As shown in Fig. 11, the RRC connection establishment unit 12 first transmits an RRC connection establishment request (wireless connection establishment request) to the network 2 (S111). Subsequently, the RRC connection control unit 21 of the network 2 returns an RRC connection establishment response (wireless connection establishment response) in response to the RRC connection establishment request. Then, the RRC connection establishment unit 12 receives the RRC connection establishment response (S112). Furthermore, upon receiving the RRC connection establishment response, the RRC connection establishment unit 12 transmits an RRC connection establishment notification (wireless connection establishment notification) to the network 2. With processes in the three steps of steps S111 to S113 as mentioned, the RRC connection is established.

Assuming the time at which the RRC connection establishment unit 12 has transmitted the RRC connection establishment notification as an RRC connection established time (wireless connection established time), the chargeable duration measurement unit 14 starts the count of the chargeable duration and stores the RRC connection established time in the chargeable duration storage unit 15 as the start time of the chargeable duration (S114). Accordingly, the chargeable duration can be measured with high precision, since the measurement is started at a time close to an accurate measurement starting time of the chargeable duration on the network 2 side.

Next, the RRC connection disconnection unit 13 receives an RRC connection disconnection request (wireless connection disconnection request) that is a notification requesting the disconnection of the RRC connection from the network 2 (S 115). Subsequently, the RRC connection disconnection unit 13 returns the RRC connection disconnection response (wireless connection disconnection response) to the network 2 in response to the RRC connection disconnection request (S116). In this manner, the RRC connection is disconnected by the RRC connection disconnection request and the RRC connection disconnection response being exchanged between the mobile terminal 1 and the network 2.

Assuming the time at which the RRC connection disconnection unit 13 has transmitted the RRC connection disconnection response as an RRC connection disconnected time (wireless connection disconnected time), the chargeable duration measurement unit 14 terminates the count of the chargeable duration and stores the RRC connection disconnected time in the chargeable duration storage unit 15 as the termination time of the chargeable duration (S117). Accordingly, the chargeable duration approximately equivalent to the chargeable duration on the network 2 side can be measured, since the mobile terminal 1 can terminate the measurement of the chargeable duration at a timing at which the measurement of the chargeable duration is terminated for certain on the network 2 side.

Next, the display unit 16 acquires the information relating to the chargeable duration from the chargeable duration storage unit 15 and displays one or both of the accumulated usage time and the remaining time (S118). Also, the chargeable duration measurement unit 14 stores one or both of the accumulated usage time and the remaining time in the chargeable duration storage unit 15 (S119).

Next, with reference to Fig. 12, another example of the measurement of the chargeable duration based on the establishment of the RRC connection and the display process in the mobile terminal 1 will be described. Processes in steps S121 to S124 are similar to steps S111 to S114 shown in Fig. 11, and therefore description will be omitted.

Next, the RRC connection disconnection unit 13 receives the RRC connection disconnection request that is a notification requesting the disconnection of the RRC connection from the network 2 (S125). Assuming the time at which the RRC connection disconnection unit 13 has received the RRC connection disconnection request as the RRC connection disconnected time, the chargeable duration measurement unit 14 terminates the count of the chargeable duration and stores the RRC connection disconnected time in the chargeable duration storage unit 15 as the termination time of the chargeable duration (S126). Accordingly, the chargeable duration approximately equivalent to the chargeable duration on the network 2 side can be measured in the mobile terminal 1, even in the case where the RRC connection disconnection response from the mobile terminal 1 has not been able to be received on the network 2 side.

Subsequently, the RRC connection disconnection unit 13 returns the RRC connection disconnection response to the network 2 in response to the RRC connection disconnection request (S127). Next, the display unit 16 acquires the information relating to the chargeable duration from the chargeable duration storage unit 15 and displays one or both of the accumulated usage time and the remaining time (S128). Also, the chargeable duration measurement unit 14 stores one or both of the accumulated usage time and the remaining time in the chargeable duration storage unit 15 (S129).

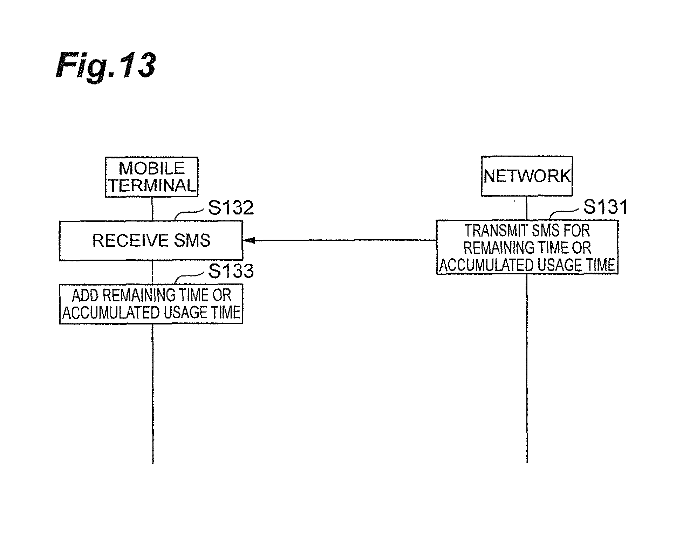

Next, with reference to Figs. 13 to 21, correction and addition processes of the information relating to the chargeable duration based on the accurate chargeable duration information acquired on the network 2 side will be described. The information relating to the chargeable duration according to the data communication with the mobile terminal 1 is stored in the chargeable duration information storage unit 22 in the network 2, and the network 2 notifies the mobile terminal 1 of information such as the accumulated usage time and the remaining time in prepaid charging by a predetermined notification method.

Fig. 13 is a timing chart showing the reception of the information relating to the chargeable duration from the network 2 side and the correction process of the chargeable duration. In step S 13 1, as shown in Fig. 13, the chargeable duration information notification unit 23 refers to the chargeable duration information storage unit 22, acquires the chargeable duration information including at least one of the accumulated usage time and the remaining time in prepaid charging, and notifies the mobile terminal 1 of the acquired chargeable duration information. This notification is carried out with a predetermined trigger. The predetermined trigger may be, for example, a predetermined time set in advance or may be when the remaining time became a predetermined time or less. Also, a method for the notification may be any method as long as notification of the information with respect to the mobile terminal 1 is possible and is carried out, for example, with a Short Message Service (SMS) or email.

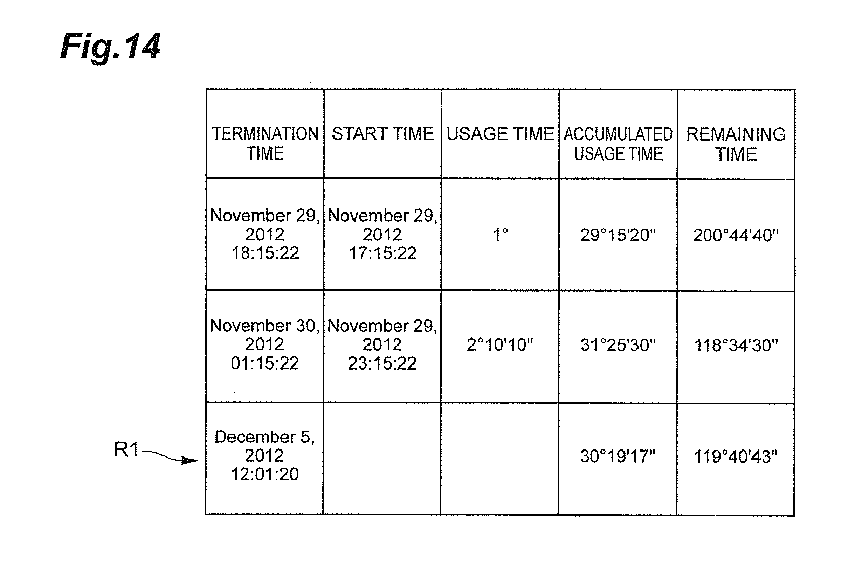

In step S132, the chargeable duration information reception unit 17 receives the chargeable duration information notified from the network 2. Then, in step S133, the chargeable duration correction unit 18 adds and stores the information relating to the chargeable duration in the chargeable duration storage unit 15 based on the chargeable duration information received by the chargeable duration information reception unit 17. Fig. 14 is a diagram showing an example of the addition of the information relating to the chargeable duration in the chargeable duration storage unit 15. In the example shown in Fig. 14, the chargeable duration correction unit 18 carries out a correction of adding a record R1. The termination time in the added record R1 is, for example, the time at which the notification has been received in step S132. Also, the accumulated usage time and the remaining time in the record R1 may be such that one thereof is included in the notification from the network 2 and the other is calculated by the chargeable duration correction unit 18.

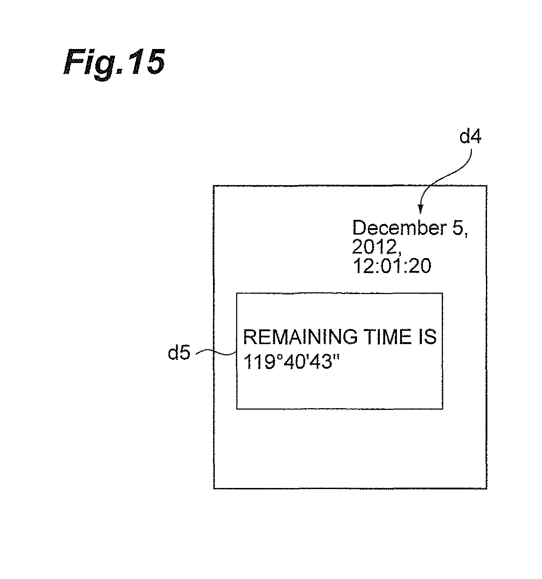

Fig. 15 is a diagram showing a display example at the time of the addition of the information relating to the chargeable duration. As shown in Fig. 15, the display unit 16 displays the received time of the notification from the network 2 as a display d4 and displays the remaining time as a display d5. Note that the accumulated usage time may be displayed instead of the remaining time.

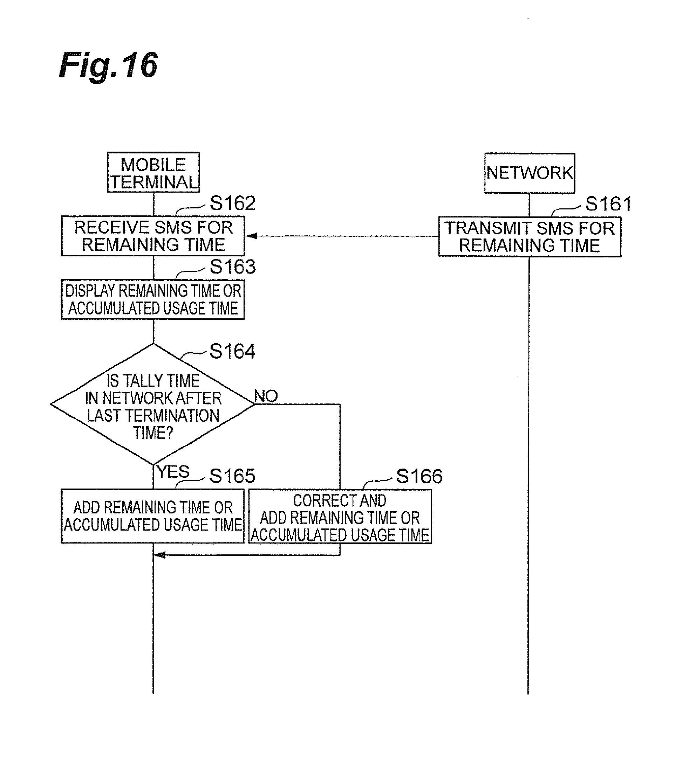

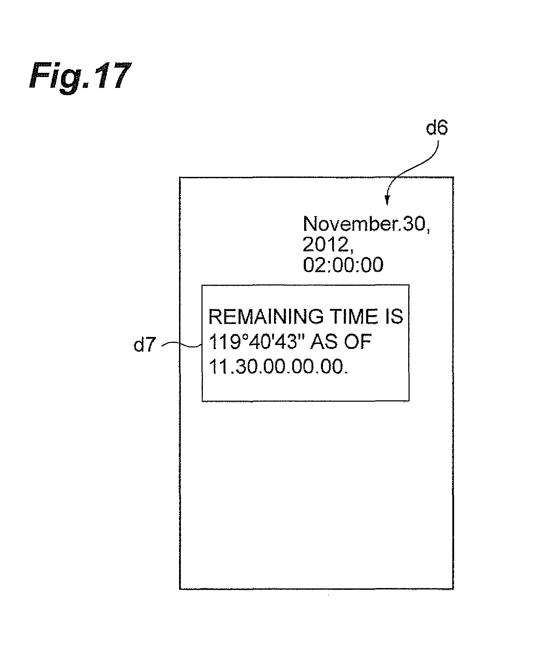

Fig. 16 is a timing chart showing another example of the reception of the information relating to the chargeable duration from the network 2 side and the correction process of the chargeable duration. Fig. 17 is a diagram showing a display example at the time of the reception of the information relating to the chargeable duration. As shown in Fig. 16, the chargeable duration information notification unit 23 notifies the mobile terminal 1 of the chargeable duration information in step S 161. Then, in step S162, the chargeable duration information reception unit 17 receives the chargeable duration information notified from the network 2. In the example shown in Fig. 16, the chargeable duration information includes at least one of the accumulated usage time and the remaining time tallied at a predetermined tally time such as, for example, 0 o'clock in the network 2.

In step S163 that follows, the display unit 16 displays the received time of the notification from the network 2 as a display d6 and displays the remaining time as a display d7, as shown in Fig. 17.

Next, in step S164, the chargeable duration correction unit 18 determines whether or not the tally time for the remaining time or the accumulated usage time included in the notification received in step S162 is after the last termination time in the information relating to the chargeable duration stored in the chargeable duration storage unit 15. In the case where it is determined that the tally time is after the last termination time in the information relating to the chargeable duration stored in the chargeable duration storage unit 15, the procedure proceeds to step S165. On the other hand, in the case where it is not determined that the tally time is after the last termination time in the information relating to the chargeable duration stored in the chargeable duration storage unit 15, the procedure proceeds to step S166.

In step S165, the chargeable duration correction unit 18 adds and stores the information relating to the chargeable duration in the chargeable duration storage unit 15 based on the chargeable duration information received by the chargeable duration information reception unit 17. The information relating to the chargeable duration added herein is similar to the record R1 shown in Fig. 14.

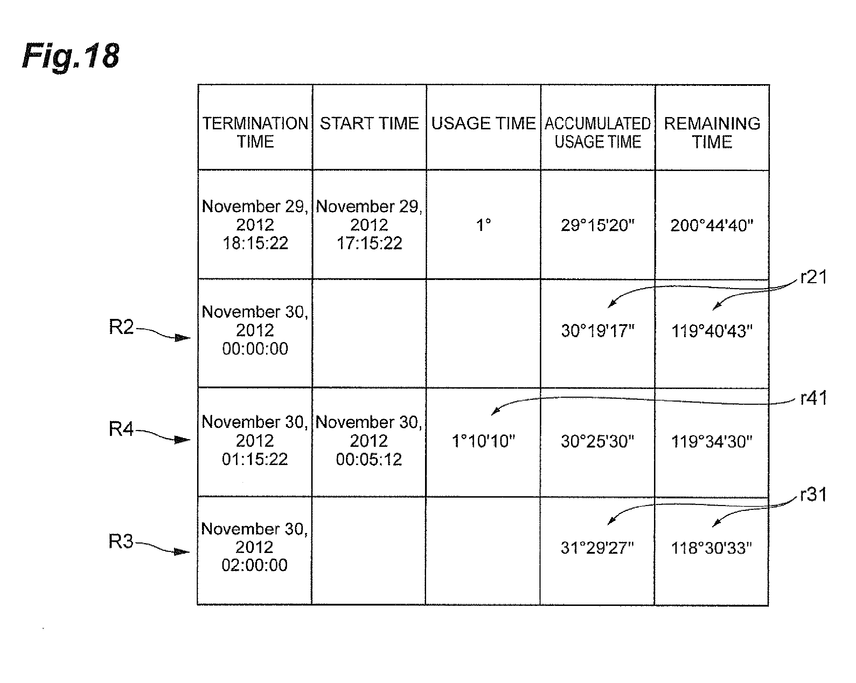

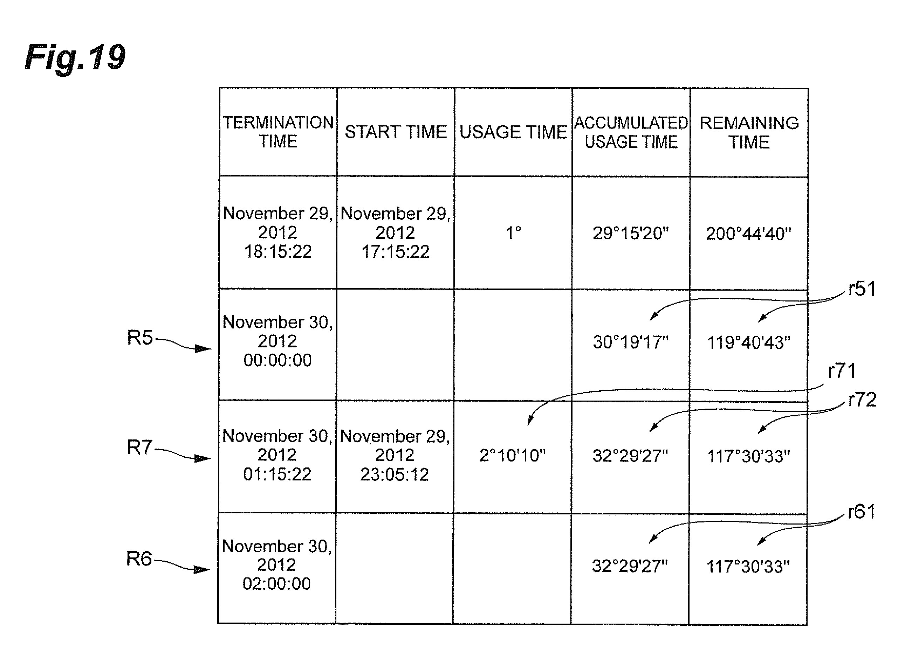

On the other hand, in step S166, the chargeable duration correction unit 18 corrects and adds the information relating to the chargeable duration in the chargeable duration storage unit 15 based on the chargeable duration information received by the chargeable duration information reception unit 17. Fig. 18 and Fig. 19 are diagrams showing examples of the addition and correction of the information relating to the chargeable duration in the chargeable duration storage unit. In the examples shown in Fig. 18 and Fig. 19, the mobile terminal 1 carries out data communication that is terminated after the tally time for the accumulated usage time or the like in the network 2. Also, the time of reception of the chargeable duration information from the network 2 is after the termination time of the data communication. Therefore, the chargeable duration correction unit 18 adds the information relating to the chargeable duration according to the tally time for the chargeable duration information from the network 2 and adds the information relating to the chargeable duration according to the received time of the chargeable duration information.

In the example shown in Fig. 18, the chargeable duration correction unit 18 adds a record R2 including the accumulated usage time and the remaining time tallied at 0 o'clock that is the predetermined tally time in the network 2 as the information relating to the chargeable duration of the chargeable duration storage unit 15. Also, the chargeable duration correction unit 18 adds a record R3 of the chargeable duration at a time (November 30, 2012, 02:00:00) at which the chargeable duration information from the network 2 has been received. The chargeable duration correction unit 18 calculates data r31 of the accumulated usage time and the remaining time in the record R3 using data r41 of the usage time of a record R4 stored in the chargeable duration storage unit 15 and data r21 of the accumulated usage time and the remaining time of the record R2.

In the example shown in Fig. 19, the chargeable duration correction unit 18 adds a record R5 including the accumulated usage time and the remaining time tallied at 0 o'clock that is the predetermined tally time in the network 2 as the information relating to the chargeable duration of the chargeable duration storage unit 15. Also, the chargeable duration correction unit 18 adds a record R6 of the chargeable duration at a time (November 11, 2012, 02:00:00) at which the chargeable duration information from the network 2 has been received. The chargeable duration correction unit 18 calculates data r61 of the accumulated usage time and the remaining time in the record R6 using data r71 of the usage time of a record R7 stored in the chargeable duration storage unit 15 and data r51 of the accumulated usage time and the remaining time of the record R5. Furthermore, the chargeable duration correction unit 18 corrects data r72 of the accumulated usage time and the remaining time in the record R7 using the data r61 of the accumulated usage time and the remaining time in the record R6.

With the correction and addition processes of the information relating to the chargeable duration based on the accurate chargeable duration information acquired on the network 2 side described above with reference to Fig. 13 to Fig. 19, the chargeable duration in the mobile terminal 1 can be corrected based on information of the true chargeable duration measured on the network 2 side, and therefore accurate information relating to the chargeable duration can be recognized in the mobile terminal 1.

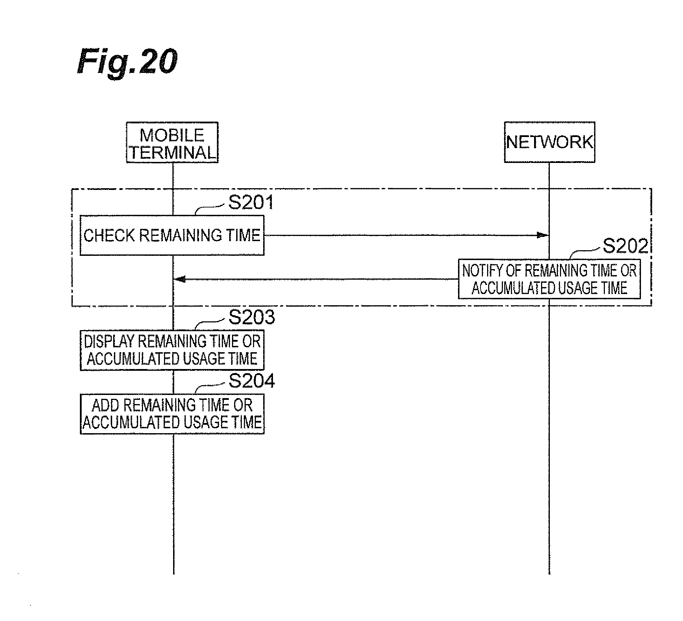

Subsequently, with reference to Fig. 20, an example of the correction process of the information relating to the chargeable duration for checking the remaining time that is triggered by an inquiry from the mobile terminal 1 will be described. In the timing charts shown in Fig. 13 to Fig. 16, the correction and the addition of the information relating to the chargeable duration are carried out with the notification such as an SMS and email from the network 2 as a trigger. In contrast, in a timing chart shown in Fig. 20, the correction and the addition of the information relating to the chargeable duration are carried out with an inquiry sent to the network 2 from the mobile terminal 1 as a trigger. Examples of the inquiry from the mobile terminal 1 include a method such as transmitting a notification request sent to the network 2 or accessing a site for a notification request of the chargeable duration information or reference of the chargeable duration information. The site is set up on the network 2 side, for example.

In step S201, as shown in Fig. 20, the chargeable duration information reception unit 17 carries out an inquiry such as an access to a site for a notification request of the chargeable duration information for checking the remaining time or reference of the chargeable duration information with respect to the network 2. In step S202 that follows, the chargeable duration information notification unit 23 notifies the mobile terminal 1 of the chargeable duration information. The chargeable duration information includes at least one of the accumulated usage time and the remaining time in prepaid charging.

Then, the display unit 16 displays at least one of the remaining time and the accumulated usage time based on the received chargeable duration information (S203), and the chargeable duration correction unit 18 adds and stores the information relating to the chargeable duration in the chargeable duration storage unit 15 based on the chargeable duration information (S204). Processes in step S203 and step S204 may be carried out with one preceding the other or may be carried out simultaneously. Note that the display in step S203 is similar to the display example shown in Fig. 15, for example. Also, the addition of the information relating to the chargeable duration in step S204 is similar to the example of the addition of the information relating to the chargeable duration in the chargeable duration storage unit 15 shown in Fig. 14.

Since the time from when the data communication connection was established up to the disconnection is measured as the chargeable duration with the mobile terminal 1 and a chargeable duration measuring method in this embodiment described above, the time in which the mobile terminal 1 uses the network resource in the network 2 is measured as the chargeable duration. Also, with the mobile terminal 1, the time from when the wireless connection was established up to the disconnection may be measured as the chargeable duration. In this case, the time in which exchange of data was actually carried out is measured as the chargeable duration. Since the information relating to the chargeable duration measured as described above is stored and displayed in the mobile terminal 1, it is possible for the mobile terminal 1 to recognize the information relating to the chargeable duration without sending an inquiry to the network 2 including the base station.

The present invention has been described in detail above based on the embodiment thereof. However, the present invention is not limited to the embodiment described above. Various modifications are possible in the present invention without departing from the gist thereof.

Note that although the mobile terminal 1 in this embodiment includes the functional units 10 to 16 for the measurement of the chargeable duration and the functional units 17 and 18 for the addition and correction of the information relating to the chargeable duration, the functional units 17 and 18 for the addition and correction of the information relating to the chargeable duration are not mandatory configurations in the present invention.

### Industrial Applicability

The present invention enables recognition of information relating to a chargeable duration without performing an inquiry to a network.

### Reference Signs List

1... mobile terminal, 2... network, 10... PDP context establishment unit, 11... PDP context disconnection unit, 12... RRC connection establishment unit, 13... RRC connection disconnection unit, 14... chargeable duration measurement unit, 15... chargeable duration storage unit, 16... display unit, 17... chargeable duration information reception unit, 18... chargeable duration correction unit, 20... PDP context control unit, 21... RRC connection control unit, 22... chargeable duration information storage unit, 23... chargeable duration information notification unit

## Claims

1. A mobile terminal that performs data communication via a mobile communication network, the mobile terminal comprising:
data communication connection establishing means for controlling establishment of data communication connection for performing the data communication with the mobile communication network;
data communication connection disconnecting means for controlling disconnection of the data communication connection;
wireless connection establishing means for controlling establishment of wireless connection with the mobile communication network;
wireless connection disconnecting means for controlling disconnection of the wireless connection;
chargeable duration storage means for storing a chargeable duration for charging for the data communication;
chargeable duration measuring means for causing the chargeable duration storage means to store, as the chargeable duration, a time from data communication connection established time that is when the data communication connection was established in the data communication connection establishing means up to a data communication connection disconnected time that is when the data communication connection was disconnected in the data communication connection disconnecting means or a time from a wireless connection established time that is when the wireless connection was established in the wireless connection establishing means up to a wireless connection disconnected time that is when the wireless connection was disconnected in the wireless connection disconnecting means; and
display means for referring to the chargeable duration storage means and displaying information relating to the chargeable duration.

2. The mobile terminal according to claim 1, wherein
the data communication connection establishing means receives, in response to a data communication connection request that the data communication connection establishing means has transmitted to the mobile communication network, a data communication connection response returned from the mobile communication network,
the wireless connection establishing means transmits, upon receiving a wireless connection establishment response from the mobile communication network in response to a wireless connection establishment request that the wireless connection establishing means has transmitted to the mobile communication network, a wireless connection establishment notification that is a notification indicating that the wireless connection has been established to the mobile communication network, and
the chargeable duration measuring means assumes the data communication connection established time to be when the data communication connection establishing means received the data communication connection response and assumes the wireless connection established time to be when the wireless connection establishing means transmitted the wireless connection establishment notification.

3. The mobile terminal according to claim 1 or 2, wherein
the data communication connection disconnecting means transmits a data communication disconnection request requesting disconnection of the data communication connection to the mobile communication network and receives a data communication disconnection response returned from the mobile communication network in response to the data communication disconnection request, and
the chargeable duration measuring means assumes the data communication connection disconnected time to be when the data communication connection disconnecting means transmitted the data communication disconnection request or received the data communication disconnection response.

4. The mobile terminal according to claim 1 or 2, wherein
the data communication connection disconnecting means receives a data communication disconnection request requesting disconnection of the data communication connection from the mobile communication network and transmits a data communication disconnection response that is a notification to respond to the data communication disconnection request to the mobile communication network, and
the chargeable duration measuring means assumes the data communication connection disconnected time to be when the data communication connection disconnecting means received the data communication disconnection request or transmitted the data communication disconnection response.

5. The mobile terminal according to claim 1 or 2, wherein
the wireless connection disconnecting means receives a wireless connection disconnection request that is a notification requesting disconnection of the wireless connection from the mobile communication network and transmits a wireless connection disconnection response that is a notification indicating completion of disconnection control of the wireless connection to the mobile communication network in response to the wireless connection disconnection request, and
the chargeable duration measuring means assumes the wireless connection disconnected time to be when the wireless connection disconnecting means received the wireless connection disconnection request or transmitted the wireless connection disconnection response.

6. The mobile terminal according to any one of claims 1 to 5, further comprising:
chargeable duration information receiving means for receiving chargeable duration information relating to the chargeable duration measured in the mobile communication network from the mobile communication network; and
chargeable duration correcting means for correcting the chargeable duration stored in the chargeable duration storage means based on the chargeable duration information received by the chargeable duration information receiving means.

7. A chargeable duration measuring method for a mobile terminal that performs data communication via a mobile communication network, the chargeable duration measuring comprising:
a data communication connection establishing step of controlling establishment of data communication connection for performing the data communication with the mobile communication network;
a wireless connection establishing step of controlling establishment of wireless connection with the mobile communication network;
a chargeable duration measurement starting step of starting measurement of a chargeable duration for charging for the data communication at a data communication connection established time that is when the data communication connection was established in the data communication connection establishing step or a wireless connection established time that is when the wireless connection was established in the wireless connection establishing step;
a data communication connection disconnecting step of controlling disconnection of the data communication connection;
a wireless connection disconnecting step of controlling disconnection of the wireless connection;
a chargeable duration measurement terminating step of terminating the measurement of the chargeable duration at a data communication connection disconnected time that is when the data communication connection was disconnected in the data communication connection disconnecting step or a wireless connection disconnected time that is when the wireless connection was disconnected in the wireless connection disconnecting step;
a chargeable duration storing step of storing, as the chargeable duration, a time from when the measurement of the chargeable duration was started in the chargeable duration measurement starting step up to when the measurement of the chargeable duration was terminated in the chargeable duration measurement terminating step; and
a displaying step of displaying information relating to the chargeable duration stored in the chargeable duration storing step.
